Europäisches Patentamt

European Patent Office

Office européen des brevets

(11) Publication number: **0 522 605 A1**

# EUROPEAN PATENT APPLICATION

(21) Application number: **92201241.4**

(22) Date of filing: **04.05.92**

(51) Int. Cl.5: **C09K 11/85**, G21K 4/00

(30) Priority: **08.07.91 EP 91201763**

(43) Date of publication of application:
**13.01.93 Bulletin 93/02**

(84) Designated Contracting States:
**BE DE FR GB**

(71) Applicant: **AGFA-GEVAERT naamloze vennootschap**
**Septestraat 27**
**B-2640 Mortsel(BE)**

(72) Inventor: **Leblans, Paul**
**Deken de Winterstraat 51,**
**B-2600 Berchem(BE)**
Inventor: **Adriaensens, Albert Domien**
**Bloemenlei 46**
**B-2640 Morstel(BE)**

(54) Photostimulable storage phosphor.

(57) A photostimulable storage phosphor which when stimulated with light having (a) wavelength(s) shorter than 550 nm has a sensitivity higher than obtained by stimulation with light having (a) wavelength(s) longer than 600 nm, said sensitivity being expressed by a figure of merit (F.O.M.), and wherein said phosphor is (i) a divalent europium activated barium fluorohalide wherein fluorine is present in excess of the other halide(s) and (ii) contains as codopant at least one metal selected from the group consisting of tin, lead, antimony, bismuth and a transition metal, e.g. iron, said codopant metal being present with respect to barium in an atom percentage (at.%) in the range of $10^{-3}$ to 8.

EP 0 522 605 A1

1. Field of the Invention.

The present invention relates to a storage phosphor which emits fluorescent light on photostimulation after being exposed to penetrating radiation and relates to the use of said phosphor in a storage panel.

2. Background of the Invention

In radiography the interior of objects is reproduced by means of penetrating radiation, which is high energy radiation also known as ionizing radiation belonging to the class of X-rays, gamma-rays and high-energy elementary particle radiation, e.g. beta-rays, electron beam or neutron radiation. For the conversion of penetrating radiation into visible light and/or ultraviolet radiation luminescent substances, called phosphors, are used.

In a conventional radiographic system an X-ray radiograph is obtained by X-rays transmitted imagewise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

In practice the light emitted imagewise by said screen irradiates a contacting photographic silver halide emulsion layer film which after exposure is developed to form therein a silver image in conformity with the X-ray image.

More recently as described e.g. in US-P 3,859,527 an X-ray recording system has been developed wherein photostimulable storage phosphors are used having in addition to their immediate light emission (prompt emission) on X-ray irradiation the property to store temporarily a large part of the X-ray energy. Said energy is set free by photostimulation in the form of fluorescent light different in wavelength from the light used in the photostimulation. In said X-ray recording system the light emitted on photostimulation is detected photoelectronically and transformed into sequential electrical signals. Photostimulable phosphors disclosed in said US-P are e.g. cerium and samarium activated strontium sulphide and europium and samarium activated strontium sulphide. In US-P 3,175,084 alkali metal halides and alkaline earth metal halides activated with an element from any of the Groups I,II, and III of the Periodic Table of Elements have been described as X-ray storage phosphors that are photostimulable with visible and infrared light.

The basic constituents of such X-ray imaging system operating with a photostimulable storage phosphor are an imaging sensor containing said phosphor in particulate form normally in a plate or panel, which temporarily stores the X-ray energy pattern, a scanning laser beam for photostimulation, a photoelectronic light detector providing analogue signals that are converted subsequently into digital time-series signals, normally a digital image processor which manipulates the image digitally, a signal recorder, e.g. magnetic disk or tape, and an image recorder for modulated light exposure of a photographic film or an electronic signal display unit, e.g. cathode-ray tube. A survey of lasers useful in the read-out of photostimulable latent fluorescent images is given in the periodical Research Disclosure December 1989, item 308117.

Of special interest in the application of said image recording and reproducing method are particular barium fluorohalide phosphors identified in US-P 4,239,968. The luminance measured by exposing said X-ray irradiated phosphors to stimulating radiation of He-Ne (633 nm) beam is much higher when compared with the stimulation light output of a $SrS:0.0001Eu,0.0001Sm$ storage phosphor described in US-P 3,859,527.

According to US-P 4,239,968 a method is claimed for recording and reproducing a radiation image comprising the steps of (i) causing a visible ray- or infrared ray-stimulable phosphor to absorb a radiation passing through an object, (ii) stimulating said phosphor with stimulation rays selected from visible rays and infrared rays to release the energy of the radiation stored therein as fluorescent light, characterized in that said phosphor is at least one phosphor selected from the group of alkaline earth metal fluorohalide phosphors represented by the formula :

$$(Ba_{1-x}M_x^{II})FX:yA$$

wherein :

$M^{II}$ is one or more of Mg, Ca, Sr, Zn and Cd;

X is one or more of Br, Cl or I;

A is at least one member of the group consisting of Eu, Tb, Ce, Tm, Dy, Pr, Ho, Nd, Yb and Er; and

x is in the range $0 \leqq x \leqq 0.6$ and y is in the range $0 \leqq y \leqq 0.2$, and that the wavelength of said stimulating rays is not less than 500 nm.

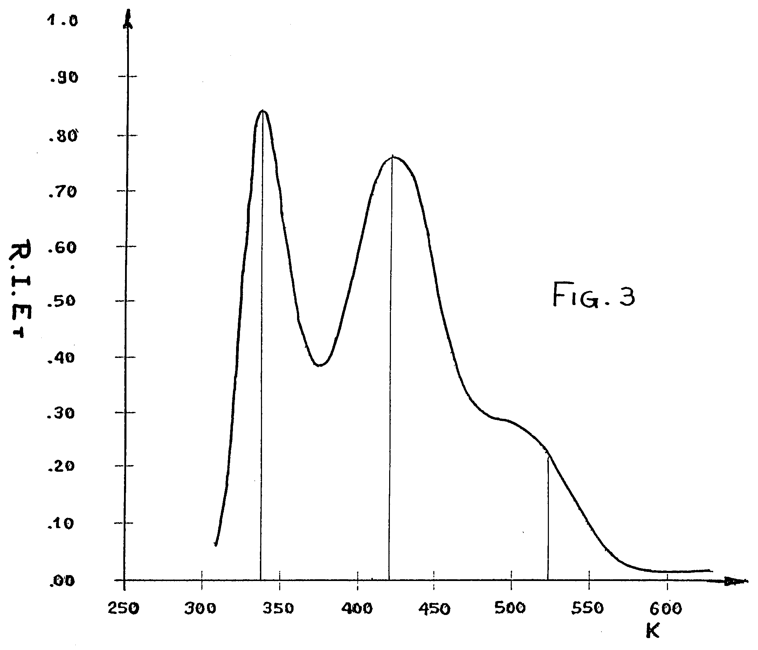

In Fig. 3 of said US-P a graph shows the relationship between the wavelength of the stimulation rays and the luminance of the stimulated light, i.e. the stimulation spectrum wherefrom can be learned that said kind of phosphor has high photostimulation sensitivity to stimulation light of a He-Ne laser beam (633 nm) but poor photostimulability below 500 nm. The stimulated light (fluorescent light) is situated in the wavelength range of 350 to 450 nm with a peak at about 390 nm (ref. the periodical Radiology, Sept. 1983, p.834.).

It can be learned from said US-P 4,239,968 that it is desirable to use a visible ray-stimulable phosphor rather than an infra-red ray-stimulable phosphor because the traps of an infra-red-stimulable phosphor are shallower than these of the visible ray-stimulable phosphor and accordingly the radiation image storage panel comprising the infra-red ray-stimulable phosphor exhibits a relatively rapid dark-decay (fading). Taking into account image fading read-out has to proceed relatively soon after the image-wise exposure to penetrating radiation and the read-out time (scanning time) has to be kept fairly short. Indeed, as explained in said US-P when the panel comprising an infra-red ray-stimulable phosphor is scanned with infra-red rays, and the fluorescent light emitted therefrom is processed electrically, a certain period of time is required to scan the overall face of the panel, and accordingly, there is the possibility that a difference arises between the initial output and the final output even though the initial portion and the final portion of the panel absorb the same amount of radiation beforehand.

For solving the problem described above it is desirable to use a photostimulable storage phosphor which has traps as deep as possible to avoid fading and to use for emptying said traps light rays having substantially higher photon energy (shorter wavelength) than the usual He-Ne laser beam of 633 nm.

Taking into account the objective of reducing the image-fading and the fact that fluorescent light emission of barium fluoride-halide phosphors is situated at about 390 nm and is practically nihil at 450 nm preference is given to such phosphors having a stimulation maximum at about 500 nm which is still sufficiently remote from the emission spectrum of their fluorescent (stimulated) light in order to allow a good separation by optical filter means of the stimulated light from the stimulating light. The filter means absorbs or rejects the stimulating light and prevents it from entering the detector means, e.g. a photomultiplier tube having a photo-electron emission sensitivity matching the wavelength range of the stimulated light.

A further advantage of photostimulation with shorter wavelenght light in comparison with the commonly used 633 nm He-Ne laser beam is an improvement in image-sharpness because shorter wavelength light of e.g. 500 nm and shorter is less diffracted in a phosphor panel containing in a binder the dispersed phosphor acting as a diffraction grating. Moreover, compact argon ion lasers having their main emission lines at 488 and 514 nm are much more powerful than Ne-Ne lasers of same size which allows much shorter read out times.

Bearing in mind the above, attempts have been made to formulate phosphor compositions showing a stimulation spectrum in which the emission intensity at the stimulation wavelength of 500 nm is higher than the emission intensity at the stimulation wavelength of 600 nm. A suitable phosphor for said purpose is described in US-P 4,535,238 in the form of a divalent europium activated barium fluorobromide phosphor having the bromine-containing portion stoichiometrically in excess of the fluorine.

A divalent europium activated barium fluorobromide phosphor prepared for said purpose is obtained by using predetermined amounts of barium fluoride and a compound of trivalent europium, and barium halide (except for barium fluoride) in an amount more than the stoichiometric amount. The firing as explained in the Example 1 proceeds in a reducing atmosphere to convert $Eu^{3+}$ into $Eu2^{+}$.

According to claim 1 of US-P 4,535,238 the photostimulation of the phosphor with its higher emission intensity upon stimulation at 500 nm proceeds with light in the wavelength range of 400 to 550 nm, the wavelength of 550 nm being exclusive.

In published European Patent Application (EP-A) 0 104 652 and corresponding US-P 4,505,989 a divalent europium activated alkaline earth metal fluorohalide phosphor containing a transition metal as a coactivator and a sodium halide phosphor is described represented by the formula :

$$M^{II}FX.xNaX':yEu^{2+}:zA$$

in which $M^{II}$ is at least one alkaline earth metal selected from the group consisting of Ba, Sr, and Ca; each of X and X' is at least one halogen selected from the group consisting of Cl , Br and I; A is at least one transition metal selected from the group consisting of V, Cr, Mn, Fe, Co and Ni; and x,y and z are numbers satisfying the conditions $0.< x \leq 2$, $0 < y \leq 0.2$ and $0 < z \leq 10^{-2}$, respectively.

Said phosphor, actually by the definition of x, x' and "x" being likewise a phosphor having the halides other than fluorine stoichiometrically in excess of the fluorine, is described for use in radiography wherein the phosphor after its X-ray exposure is photostimulated with light in the wavelength range of 400 to 850 nm. The phosphor obtains through the presence of the sodium halide (NaX') an improved luminance and through the presence of the transition metal such as Fe an improved erasability upon exposure to light having a wavelength within the wavelength region of photostimulability.

In European patent specification 0 174 875 B1 (see also US-P 5,028,509) a radiation energy storage panel is claimed containing a stimulable phosphor represented by the following formula :

$$(M_{1-x}.M'_x)X . aM''X'_2 . bM'''X''_3 . cA:dB$$

wherein M represents either Cs or Rb; and M' represents at least one metal which is Li, Na, K, Rb or Cs; M'' represents at least one divalent metal which is Be, Mg, Ca, Sr, Ba, Zn, Cd, Cu or Ni; M''' represents at least one metal which is Sc, Y, La, Ce, Pr, Nd, Sm, Eu, Cd, Tb, Dy, Ho, Er, Tm, Yb, Lu, Al, Ga or In; A represents at least one metal oxide wich is BeO, MgO, CaO, SrO, BaO, ZnO, $Al_2O_3$, $Y_2O_3$, $La_2O_3$, $In_2O_3$, $SiO_2$, $TiO_2$, $GeO_2$, $SnO_2$, $Nb_2O_3$, $Ta_2O_5$ or $ThO_2$; B represents at least one metal which is Eu, Tb, Ce, Tm, Dy, Pr, Ho, Nd, Yb, Er, Gd, Lu, Sm, Y, Tl, Na, Ag, Cu, Mg, Pb, Bi, Mn ot In; X, X' and each X'', which may be the same or different each represents a halogen atom which is F, Cl , Br or I; x, a, b, c and d are, independently, numerals in the range of $0 \leq x \leq 1$, $0 \leq a \leq 1$, $0 \leq b \leq 0.5$, $0 \leq c \leq 0.5$ and $0 \leq d \leq 0.2$, respectively.

The phosphors according to said lastmentioned formula are claimed to have a higher luminance, rapid response and a rapid elimination speed for residual image upon repeated use. Said phosphors should have a broadened stimulation spectrum up to the near infrared region so that a semiconductor laser may be employable as an exciting light source.

Phosphors wherein the fluorine-containing portion is superstoichiometrically present with respect to the other halogen portion are described e.g. in published EP-A 0 021 342; 0 345 903; 0 345 904; 0 345 905 and US-P 4,587,036.

In published EP-A 0 345 905 a rare earth metal doped barium strontium fluorohalide phosphor is claimed characterized by the following empirical formula :

$$Ba_{1-x}Sr_xF_{2-a-b}Br_aX_b:zA$$

wherein :
X is at least one member selected from the group consisting of Cl and I;
x is in the range $0< x <0.15$;
a is in the range $0.70 \leq a \leq 0.96$;
b is in the range $0 \leq b <0.15$;
z is in the range $10^{-7}< z \leq 0.15$, and
A is $Eu^{2+}$ or $Eu^{2+}$ together with one or more co-dopants selected from the group consisting of $Eu^{3+}$, Tm, Dy, Pr, Ho, Nd, Yb, Er, Gd and Lu, and wherein fluorine is present stoichiometrically in said phosphor in a larger atom % than bromine taken alone or bromine combined with chlorine and/or iodine. From Fig. 3 of said lastmentioned published EP-A can be learned that that the gadolinium co-doped phosphor prepared according to INVENTION EXAMPLE 1 described therein is characterized by a stimulation spectrum having a maximum below 500 nm. The gadolinium co-dopant has been introduced in the phosphor firing mixture as $GdF_3$ in the presence of $EuF_3$, $BaF_2$ and $SrF_2$. An amount of $NH_4Br$ has been used in a substoichiometric quantity (94.2 % of the stoichiometric amount) to obtain a phosphor with fluorine stoichiometrically in excess with respect to bromine.

During the firing of the barium fluoride with ammonium bromide some of the ammonium bromide sublimates (452 °C) so that not all the bromine of the raw material mixture is built-in in the phosphor structure.

A problem associated with photostimulable storage phosphors having relatively deep traps and photostimulability at shorter wavelengths is their more difficult erasability which impedes their rapid repeated use.

2. Objects and Summary of the Invention

It is an object of the present invention to provide photostimulable storage phosphors having a particularly slow dark-decay of energy stored on irradiation with penetrating radiation.

It is a further object to provide photostimulable storage phosphors of which the stored energy can be freed efficiently as fluorescent light by photostimulation with light in a wavelength range below 550 nm, so

EP 0 522 605 A1

that light of an argon ion laser corresponding with its main emission lines of 514.5 nm and 488 nm and frequency doubled light (532 nm) of a solid state Nd-YAG laser originally emitting at 1064 nm can be more efficiently used in photostimulation than He-Ne laser light of 633 nm.

It is another object of the present invention to provide photostimulable storage phosphors of which the erasability of stored energy is improved.

It is still another object of the present invention to provide an X-ray screen or panel containing a said photostimulable storage phosphor dispersed in a binder layer.

It is a still further object of the present invention to provide a method of recording and reproducing a pattern of penetrating radiation by means of a panel including a said phosphor.

Other objects and advantages of the present invention will become clear from the following description.

In accordance with the present invention a photostimulable storage phosphor is provided which when stimulated with light having (a) wavelength(s) shorter than 550 nm has a sensitivity higher than obtained by stimulation with light having (a) wavelength(s) longer than 600 nm, said sensitivity being represented by a figure of merit (F.O.M.) calculated by the following equation :

F.O.M. = 1000 x C.E./S.E.

wherein :
C.E. is the total amount of radiation energy expressed in pJ that can be released by photostimulation from a volume of 1 mm$^3$ of a 300 $\mu$m thick phosphor-containing layer irradiated with an X-ray dose of 1 mR, and S.E. is the energy of the stimulating light expressed in $\mu$J needed to release 63 % of the energy stored in an area of 1 mm$^2$ of said layer; and said phosphor (i) is a divalent europium activated barium fluorohalide wherein fluorine is present in excess of the other halide(s), and (ii) contains as codopant at least one metal selected from the group consisting of tin, lead, antimony, bismuth and a transition metal selected from the group consisting of V, Cr, Mn, Fe, Co, and Ni, said codopant metal being present with respect to barium in an atom percent ((at.%) in the range of 10$^{-3}$ to 8; the terminology barium fluorohalide including an empirical formula wherein a minor part of the barium (less than 50 atom %) is replaced optionally by at least one metal selected from the group consisting of an alkali metal and an alkaline earth metal other than barium.

Preferably the barium fluorohalide is a bariumfluorobromide, wherein optionally a minor part (less than 50 atom %) of the bromine is replaced by chlorine, and/or iodine.

Preferably in said barium fluorohalide fluorine is present in a 3 to 12 atom % in excess over bromine or bromine combined with chlorine and/or iodine.

In accordance with the present invention a radiation image recording and reproducing method is provided which method comprises the steps of :

(i) causing said europium(II)-activated codoped barium fluorohalide phosphor to absorb penetrating radiation having passed through an object or emitted by an object and to store energy of said penetrating radiation in said phosphor,

(ii) stimulating said phosphor with visible radiation in the wavelength range from 450 nm to 550 nm, preferably in the wavelength range of 480 to 540 nm, to release energy stored in said phosphor as fluorescent light differing in wavelength range from the stimulating light,

(iii) detecting said fluorescent light, and

(iv) erasing residual energy stored in said phosphor by at least one type of electromagnetic radiation selected from the group consisting of ultraviolet, visible and infrared light.

3. Short Description of the Drawings

Figure 1 represents stimulation spectrum curves, wherein curve 1 relates to the bismuth-free europium doped barium fluoride-bromide phosphor of comparison example 3 and curve 2 to a bismuth codoped phosphor according to the present invention prepared as described in Example 2.

In Fig. 2 the figure of merit (F.O.M.) as defined herein is plotted in the ordinate and the bismuth codopant concentration in the abscissa.

Figures 3 and 4 represent respectively the "thermostimulation luminescence" (TSL) spectra of the phosphor of comparative example 3 and of the bismuth-codoped phosphor according to the present invention prepared as described in Example 2.

4. Detailed Description of the Invention

Bismuth and tin are preferred codopants for increasing the phosphor sensitivity expressed herein by a figure of merit (F.O.M.).

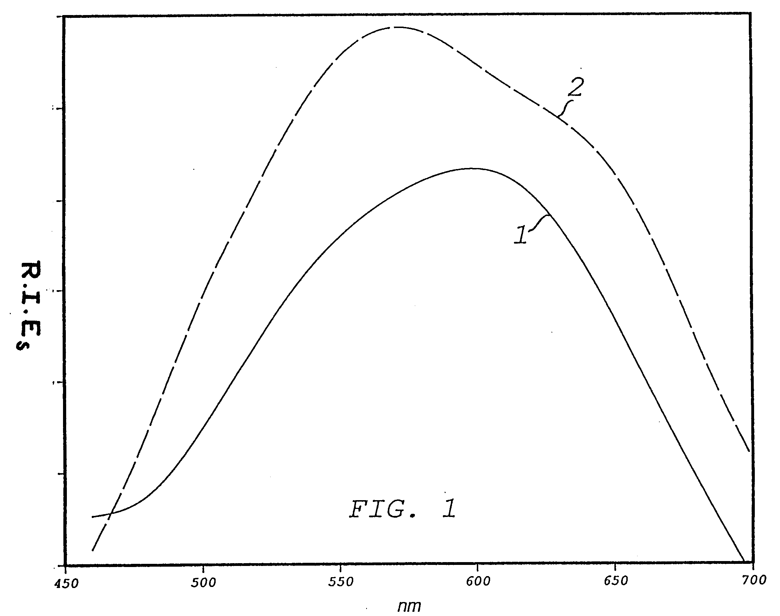

The shift of the maximum of the photostimulation spectrum to the shorter wavelengths of a phosphor according to the invention codoped with Bi is illustrated in the accompanying Fig. 1 already presented in the priority document being unpublished European patent application 91201763.9 filed 8th July, 1991.

A preferred bismuth codoped phosphor in accordance with the invention described in said unpublished European patent application is within the scope of the following empirical formula :

$$Ba_{1-x-y-z-3p}Sr_xM^{II}_yF_{2-a-b}Br_aX_b:zA:2pBi$$

wherein :
$M^{II}$ is at least one member selected from the group consisting of Mg and Ca;
X is at least one member selected from the group consisting of Cl and I;
x is in the range $0 \leq x \leq 0.55$;
y is in the range $0 \leq y \leq 0.05$;
a + b is smaller than 1,
a is in the range $0.70 \leq a \leq 0.96$,
b is in the range $0 \leq b < 0.15$;
z is in the range $10^{-6} \leq z \leq 10^{-2}$,
A is $Eu^{2+}$ or $Eu^{2+}$ together with one or more of the co-dopants selected from the group consisting of $Eu^{3+}$, Y, Tb, Ce, Tm, Dy, Pr, Ho, Nd, Yb, Er, La, Gd and Lu,
Bi is trivalent bismuth, and
p is in the range of $10^{-5} \leq p \leq 0.02$.

Photostimulable phosphors according to the present invention include phosphors containing an alkali metal selected from the group consisting of Li, Na, K, Rb and Cs, with respect to barium preferably in an atom percent in the range of $10^{-2}$ to 1 at%.

Photostimulable phosphors according to the present invention may contain as a further codopant samarium and/or gadolinium such with respect to barium preferably in an atom percent in the range of $10^{-4}$ to 1 at%.

Preferred photostimulable phosphors according to the present invention contain Sr with respect to barium in an atom percent in the range of $10^{-1}$ to 20 at%. By the presence of strontium and fluorine in excess the X-ray conversion efficiency (C.E.) of the phosphor is increased markedly (ref. published EP-A 0 345 903).

Particularly interesting phosphors according to the present invention are within the scope of the following empirical formula (I) :

$$Ba_{1-x-y-p-z-3m}Sr_xM_y^{II}M_{2p}^{I}F_{2-a-b}Br_aX_b:zEu^{2+}:2mA^{3+}$$

wherein :
X is at least one halogen selected from the group consisting of Cl and I;
$M^I$ is at least one alkali metal, preferably K and/or Cs;
$M^{II}$ is at least one alkaline earth metal selected from the group consisting of Ca and Mg;
A is at least one metal selected from the group consisting of Sb and Bi;
a + b is smaller than 1;
a is in the range $0.70 \leq a < 0.96$;
b is in the range $0 \leq b < 0.15$;
x is in the range $0 \leq x \leq 0.55$;
y is in the range $0 \leq y \leq 10^{-1}$;
p is in the range $0 \leq p \leq 0.06$;
z is in the range $10^{-6} \leq z \leq 10^{-2}$; and
m is in the range $10^{-5} \leq m \leq 0.02$.

Other particularly interesting phosphors according to the present invention are within the scope of the following empirical formula (II) :

$$Ba_{1-x-y-p-z-m}Sr_xM_y^{II}M_{2p}^{I}F_{2-a-b}Br_aX_b:zEu^{2+}:(2/q)mT^{q+}$$

wherein :
X is at least one halogen selected from the group consisting of Cl and I,
$M^I$ is at least one alkali metal, preferably K and/or Cs;

$M^{II}$ is at least one alkaline earth metal selected from the group consisting of Ca and Mg;

T is at least one transition metal selected from the group consisting of V, Cr, Mn, Fe, Co, and Ni;

a + b is smaller than 1;

a is in the range $0.70 \leq a < 0.96$;

b is in the range $0 \leq b < 0.15$;

x is in the range $0 \leq x \leq 0.55$;

y is in the range $0 \leq y \leq 10^{-1}$;

p is in the range $0 \leq p \leq 0.06$;

q is 2 or 3;

z is in the range $10^{-6} \leq z \leq 10^{-2}$; and

m is in the range $10^{-5} \leq m \leq 0.12$.

Still other particularly interesting phosphors according to the present invention are within the scope of the following empirical formula (III) :

$$Ba_{1-x-y-p-z-m}Sr_xM_y^{II}M_{2p}^{I}F_{2-a-b}Br_aX_b:zEu^{2+}:mQ^{2+}$$

wherein :

X is at least one halogen selected from the group consisting of Cl and I,

$M^{I}$ is at least one alkali metal, preferably K and/or Cs;

$M^{II}$ is at least one alkaline earth metal selected from the group consisting of Ca and Mg;

Q is at least one metal selected from the group consisting of Pb and Sn;

a + b is smaller than 1;

a is in the range $0.70 \leq a < 0.96$;

b is in the range $0 \leq b < 0.15$;

x is in the range $0 \leq x \leq 0.55$;

y is in the range $0 \leq y \leq 10^{-1}$;

p is in the range $0 \leq p \leq 0.06$;

z is in the range $10^{-6} \leq z \leq 10^{-2}$; and

m is in the range $10^{-5} \leq m \leq 0.08$.

In preferred phosphors according to said empirical formulae (I), (II) and (III) "a" is in the range of $0.90 \leq a \leq 0.96$, and b is zero.

In preferred phosphors according to said empirical formula (I) p is in the range of $10^{-4} \leq p \leq 10^{-2}$, and the preferred alkali metal for improving the erasability of energy stored in the phosphor is potassium. Lithium is preferred for shifting the stimulation maximum to the shorter wavelengths.

In preferred phosphors according to said empirical formulae (I), (II) and (III) containing strontium in combination with barium the value "x" is preferably in the range $0.12 \leq x \leq 0.17$ when $0.90 \leq a \leq 0.96$, and $0.55 \leq x \leq 0.17$ when $0.85 \leq a \leq 0.96$.

In preferred phosphors according to said empirical formulae (I), (II) and (III) "z" is in the range $10^{-4} < z \leq 10^{-2}$.

A photostimulable phosphor according to the present invention is prepared preferably by using as starting materials in the firing :

(1) barium fluoride;

(2) ammonium bromide;

(3) optionally barium halide (except barium fluoride),

(4) an alkali metal compound. e.g. lithium fluoride, lithium chloride, lithium bromide, lithium iodide, sodium fluoride, sodium chloride, sodium bromide, potassium fluoride, rubidium fluoride, cesium fluoride, lithium hydroxide or oxide or lithium carbonate;

(5) a strontium halide, optionally in admixture with a calcium and/or magnesium halide;

(6) a halide or an oxide or salt thermally decomposable into oxide, e.g. nitrate, of at least one of the elements enumerated under A, T and Q;

(7) at least one europium containing compound selected from the group consisting of europium halide, europium oxide, europium nitrate and europium sulphate, preferably $EuF_3$ that is reduced to yield $Eu^{2+}$ ions during firing; and

(8) optionally a further codopant e.g. a samarium compound, as halide or oxide.

Firing proceeds preferably in the temperature range of 700 to 1000 °C and in a reducing atmosphere. The firing may proceed in several stages e.g. when using an oxide as described in US-P 4,532,071.

According to a particular example the preparation of a phosphor according to the present invention proceeds as follows :

- a raw mix of 0.859 mol of $BaF_2$, 0.14 mol of $SrF_2$, 1 mol of $NH_4Br$ and 0.001 mol of $EuF_3$ was prepared. To that mix small amounts (in the range of 0.1 to 1 wt % to the total solids) of $Bi_2O_3$ were added. The thus obtained raw mix was then fired at a temperature between 700 and 1000 °C in a reducing atmosphere. The firing lasted at least 3 h but may proceed up to 10 h.

The reducing atmosphere is a mixture of hydrogen with inert gas, e.g. argon or nitrogen or is formed in situ by reaction of charcoal and water vapour to form a mixture of hydrogen and carbon monoxide or hydrogen and carbon dioxide. In the reducing atmosphere most or all of the trivalent europium present is reduced to divalent europium.

After the firing is completed the product obtained is pulverized. The pulverized product may be further fired. Multiple firing may be advantageous to improve the homogeneity and stimulation properties of the phosphor.

In the method according to the present invention the photostimulable phosphor is used preferably in dispersed state in a binder layer that may be supported or self-supporting and forms a screen or panel, called an X-ray image storage panel.

Suitable binders for forming a binder layer incorporating said phosphor in dispersed form are film forming organic polymers, e.g. a cellulose acetate butyrate, polyalkyl (meth)acrylates, e.g. poly(methyl methacrylate), a polyvinyl-n-butyral e.g. as described in the United States Patent Specification 3,043,710, a copoly(vinyl acetate/vinyl chloride) and a copoly(acrylonitrile/butadiene/styrene) or a copoly(vinyl chloride/vinyl acetate/vinyl alcohol) or mixture thereof.

It is preferable that a minimum amount of binder be employed to obtain a high X-ray energy absorption. However, a very small amount of binding agent may result in a too brittle layer, so a compromise has to be made. The coverage of the phosphor is preferably in the range from about 300 to 1500 g/m2. The thickness of the phosphor layer is preferably in the range of 0.05 to 0.5 mm.

According to a preferred embodiment the phosphor layer is used as a supported layer on a support sheet. Suitable support materials are made of a film forming organic resin, e.g. polyethylene terephthalate, but paper and cardboard supports optionally coated with a resin layer such as an alpha-olefinic resin layer are also particularly useful. Further glass and metal supports are used in certain circumstances, the latter preferably of high atomic weight, as described e.g. in US-P 3,872,309 and 3,389,255, for use in industrial radiography (non-destructive testing).

According to a particular embodiment for industrial radiography the image-sharpness of the phosphor screen is improved by incorporating in the phosphor screen between the phosphor-containing layer and the support and/or at the rear side of the support a pigment-binder layer containing a non-fluorescent pigment being a metal compound, e.g. salt or oxide of lead, as described in Research Disclosure September 1979, item 18502.

For the preparation of the photostimulable phosphor screen the phosphor particles are intimately dispersed in a solution of the binder using an organic solvent, e.g. 2-methoxy-propanol or ethyl acetate, and then coated on the support and dried. The coating of the present phosphor binder layer may proceed according to any usual technique, e.g. by spraying, dip-coating or doctor blade coating. After coating, the solvent(s) of the coating mixture is (are) removed by evaporation, e.g. by drying in a hot (60°C) air current.

Solvent-less coating may be carried out by using UV or electron beam (EB) curable binder compositions as described e.g. in Research Disclosure December 1977, item 16435.

An ultrasonic treatment can be applied to improve the packing density and to perform the de-aeration of the phosphor-binder combination. Before the optional application of a protective coating the phosphor-binder layer may be calendered to improve the packing density (i.e. the number of grams of phosphor per cm3 of dry coating).

Optionally, a light-reflecting layer is provided between the phosphor-containing layer and its support to enhance the output of light emitted by photostimulation. Such a light-reflecting layer may contain white pigment particles dispersed in a binder, e.g. titanium dioxide particles as described e.g in US-P 3,023,313, or it may be made of a vapour-deposited metal layer, e.g. an aluminium layer, or it may be a coloured pigment layer absorbing stimulating radiation but reflecting the emitted light as described e.g. in US-P 4,380,702.

Optionally a light-absorbing layer is provided between the phosphor-containing layer and its support or in the support itself to avoid reflection and scattering of light at the interface of the support and the phosphor-containing layer, thereby increasing the image resolution of the photostimulable phosphor screen.

Since in the above described X-ray recording system operating with photostimulable radiographic screens the screens are used repeatedly, it is important to provide them with an adequate topcoat for protecting the phosphor-containing layer from mechanical and chemical damage. This is particularly important for photostimulable radiographic screens where each screen normally is not encased in a cassette.

A protective layer can be coated onto the phosphor containing layer by directly applying thereto a coating solution containing a film-forming organic solvent-soluble polymer such as nitrocellulose, ethylcellulose or cellulose acetate or poly(meth)acrylic resin and removing the solvent by evaporation. According to another technique a clear, thin, tough, flexible, dimensionally stable polyamide film is bonded to the phosphor layer as described in published EP 00 392 474.

According to a further known technique a protective overcoat is produced with a radiation-curable composition. Use of a radiation curable coating as protective toplayer in a X-ray conversion screen is described e.g. in EP 209 358 and JP 86/176900 and US-P 4,893,021. For example, the protective layer comprises a UV cured resin composition formed by monomers and/or prepolymers that are polymerized by free-radical polymerization with the aid of a photoinitiator. The monomeric products are preferably solvents for the prepolymers used.

According to a preferred embodiment the photostimulation of the phosphor-binder layer that has been image-wise or pattern-wise exposed with X-rays proceeds with a scanning laser beam.

Preferred light sources for producing stimulation light in the wavelength range of 440 nm to 550 nm are the frequency doubled (532 nm) solid state Nd-YAG laser, an argon ion laser wherefrom either the 488 nm line or 514 nm emission line is used, and a He-Cd laser emitting at 442 nm.

Suitable filter means for separating the stimulation light from the stimulating light can be : cut-off filters, transmission bandpass filters and band-reject filters. A survey of filter types and spectral transmittance classification is given in SPSE Handbook of Photographic Science and Engineering, Edited by Woodlief Thomas, Jr. - A Wiley-Interscience Publication - John Wiley & Sons, New York (1973), p. 264-326.

Shortwave pass filters that transmit the shorter wavelengths and reject the longer wavelengths are listed in Table 4.12 of said SPSE Handbook.

Bandpass filters that transmit or reject only a limited band of wavelengths are listed in Tables 4.13 and 4.14 respectively. Tables of many selected long-wave, shortwave pass, and bandpass filters, both liquid and solid, for wavelengths from 150 to 3500 nm, are given by W. Summer, Photo Sensitors, Chapman & Hall, London, 1957, chap. 9.

For example, a narrow bandpass filter SCHOTT BG3 (trade name) is used in the method according to the present invention.

For blocking the light of a narrow laser line holographic band-reject filters designed for Raman spectroscopy are used preferably. Such filters are described in the periodical Applied Spectroscopy, Volume 45, Number 5, 1991, p.765-770. Such filters are commercially available from Physical Optics Corporation, 20600 Gramercy Place, Suite 103, Torrance, California 90501 under the name Raman Holographic Edge (RHE) filters. Such filters for blocking selectively 488 nm, 514, and 532 nm laser light are commercially available in diameters of 1 or 2 inch identified by Part Numbers RHE 488, RHE 514 and RHE 532 respectively.

In the catalogue (July 1990) of the company OMEGA OPTICAL INC. 3 Grove Street, PO Box 573, Brattleboro Vermont 05301 USA interference filters and coatings are described. From said catalogue can be learned that there are several types of said band-reject filters on the market. In one type described in said catalogue under the name RAMAN NOTCH (RN) SERIES filters high-performance rejection band filters consist of four precisely aligned interference filters arranged in a chevron baffle (see page 14 of the main catalogue) and are sealed in a rectangular housing. In Figure 3 of the catalogue optical density versus wavelength (nm) curve for the OMEGA RAMAN NOTCH filter tuned to the 514.5 argon-ion laser is given. It deeply attenuates the laser light to a minimum of $10^{-6}$, has a ripple-free transmission region on both sides of the rejection band, and peak transmission of 90%.

The other type of rejection band filters described in said catalogue under the name OMEGA REJECTION BAND (RB) series filters attenuate a spectral line or a narrow spectral band and transmit wavelengths of light both longer and shorter than those in the band of rejection. RB series filters are useful where weak fluorescent electromagnetic signals are obscured by the relatively very high intensity of the stimulating laser light.

The light emitted by photostimulation (called stimulation light) is detected preferably photo-electronically with a transducer transforming light energy into electrical energy, e.g. a phototube (photomultiplier) providing sequential electrical signals that can be digitized and stored. After storage these signals can be subjected to digital processing. Digital processing includes e.g. image contrast enhancement, spatial frequency enhancement, image subtraction, image addition and contour definition of particular image parts.

According to one embodiment for the reproduction of the recorded X-ray image the optionally processed digital signals are transformed into analog signals that are used to modulate a writing laser beam, e.g. by means of an acousto-optical modulator. The modulated laser beam is then used to scan a photographic material, e.g. silver halide emulsion film whereon the X-ray image optionally in image-processed state is reproduced.

According to another embodiment the digital signals obtained from the analog-digital conversion of the electrical signals corresponding with the light obtained through photostimulation are displayed on a cathode-ray tube. Before display the signals may be processed by computer. Conventional image processing techniques can be applied to reduce the signal-to-noise ratio of the image and enhance the image quality of coarse or fine image features of the radiograph.

On the phosphors of the present invention measurements have been carried out to determine their photo-physical properties.

In one measurement the total photostimulable energy stored upon exposure to a given X-ray dose is determined. Prior to X-ray excitation any residual energy still present in the phosphor screen is removed by irradiation. To avoid photoexcitation during erasure a cut-off Schott GG435 filter, which eliminates all wavelengths below 435 nm, is placed between a lamp emitting photostimulating light and the phosphor screen. The phosphor screen is then excited with an X-ray source operating at 85 kVp and 20 mA. For that purpose the MONODOR X-ray source of Siemens AG - W.Germany may be used. The low energy X-rays are filtered out with a 21 mm thick aluminium plate to harden the X-ray spectrum. After X-ray excitation the phosphor screen is transferred in the dark to the measurement setup. In this setup laser light is used to photostimulate the X-ray irradiated phosphor screen. The photostimulating light used in these measurements was 488 nm light of an argon ion laser, frequency-doubled laser light (532 nm) of a Nd-YAG laser or 633 nm He-Ne laser light.

The laser-optics comprise an electronic shutter, a beam-expander and two filters. A photomultiplier (Hamamatsu R 1398) collects the light emitted by the photostimulation and gives a corresponding electrical current. The measurement procedure is controlled by a Hewlett Packard HP 9826 computer connected to a HP 6944 multiprogrammer. After amplification with a current to voltage converter a TEKTRONIX 7D20 digital oscilloscope visualizes the photocurrent obtained. When the electronic shutter is opened the laser beam begins to stimulate the phosphor screen and the digital oscilloscope is triggered. Using a pinhole placed in contact with the screen an area of only 7 mm2 is exposed. Only half of the laser power reaches the screen surface. In this way the intensity of the stimulating beam is more uniform. A red filter (3 mm SCHOTT OG 590) placed immediately in front of the laser eliminates the weak ultraviolet components in the He-Ne laser emission. In case the argon ion laser light of 488 nm is used for photostimulation a combination of a SCHOTT GG455 and BG39 filter was placed in front of the laser to remove both the weak ultraviolet and infrared components of the laser emission light. The signal amplitude from the photomultiplier is linear with the intensity of the photostimulating light and with the released photostimulable energy. The signal decreases gradually following a power function. When the signal curve is entered the oscilloscope is triggered a second time to measure the offset which is defined as the component of error that is constant and independent of inputs. After subtracting this offset the point at which the signal reaches 1/e of the maximum value is calculated. The integral below the curve is then calculated from the start to this 1/e point. The function is approximated mathematically by $f(t) = A.e-t/\tau$ :

wherein A is the signal amplitude, $\tau$ is the time constant, t is the stimulation time, and e is the base number of natural logarithms. At $t = \tau$ 63 % of the stored energy has been released. To obtain said result, the computer multiplies the integral with the sensitivity of the system. The sensitivity of the photomultiplier and amplifier have therefore to be measured as a function of anode-cathode voltage of the photomultiplier and the convolution of the emission spectrum of the phosphor and the transmission spectrum of the separating filter has been calculated.

Because the emitted stimulation light is scattered in all directions only a fraction of said light is detected by the photomultiplier. The positions of the panel and photomultiplier are such that 10 % of the total emission is detected by the photomultiplier.

After all these corrections have been made a value for conversion efficiency (C.E$_1$.) is obtained expressed in $pJ/mm^2/mR$. To correct for the the total quantity of phosphor irradiated with X-rays, this value is divided by the screen thickness to yield a conversion efficiency (C.E.) expressed in $pJ/mm^3/mR$. This value varies with screen thickness and therefore for measurements to be comparable they have to be carried out at constant phosphor coverage.

The stimulation energy (S.E.) is defined as the laser-energy necessary to release 63 % of the stored energy and is expressed in $\mu J/mm^2$.

The sensitivity of the X-ray image recording phosphor material is directly proportional to the signal amplitude A upon photostimulation of the emission intensity versus time and may be expressed by the ratio of C.E. to S.E. Said ratio expressed in units of $10^{-9}/mm.mR$ is called here the figure of merit (F.O.M.) and is calculated by the already mentioned equation :

F.O.M. = 1000 x C.E./S.E.

The F.O.M. is directly proportional to the initial stimulation light emission intensity upon laser stimulation divided by the laser power and the applied X-ray dose, and is therefore a measure of the sensitivity of the photostimulable storage phosphor.

The erasability is obtained by carrying out two determinations of the sensitivity under two different circumstances. In a first determination of said sensitivity (Ao, F.O.Mo.) as described above the phosphor-containing layer is exposed to a relatively poor X-ray dose (Xo).

In a second determination of the sensitivity (Ae, F.O.Me.) the phosphor-containing layer is exposed firstly to an X-ray dose (Xe) about 30 times higer than in the first determination, and secondly is subjected to an erasure exposure.

Said erasure exposure is carried out with a tungsten lamp having an electrical power of 300 W provided with a filter (5 mm SCHOTT GG435) blocking the ultraviolet light component of said lamp. The erasure exposure lasts 20 seconds while the phosphor-containing layer is kept at a distance of 10 cm from the light source.

The depth of erasure (Ed) expressed in decibel (dB) is calculated with the following equation :

$$Ed = 10 \times \log \frac{Ao/Xo}{Ae/Xe} \qquad or \qquad 10 \times \log (F.O.M.o/F.O.M.e)$$

wherein Ao, Ae are the signal amplitudes; Xo, Xe are the applied X-ray doses and F.O.M.o, F.O.M.e are the Figures of Merit for respectively the non-erased and erased phosphor-containing layer.

In another measurement the stimulation spectrum is determined. The light of a tungsten (quartz-iodine) lamp is fed into a monochromator (Bausch and Lomb - Germany) and then mechanically chopped with a rotating wheel with a single hole. The lamp provides a continuous spectrum extending from the near UV through the visible spectrum into the infrared. The 33-86-02 grating from Bausch and Lomb is a 1350 line/mm grating covering the visible range from 350 nm to 800 nm in the first order and is blazed at 500 nm. The wavelength of the stimulating light can be set via a step motor connected to the monochromator under the control of a computer. The second harmonic of the monochromator is eliminated by placing a 4 mm Schott GG435 filter in front of the phosphor screen. By chopping the stimulating light (duty cycle 1/200) only a small fraction of the absorbed energy in the phosphor is released. Only the AC signal is measured to eliminate the offset caused by e.g. the dark current of the photomultiplier. A good signal to noise ratio is obtained by averaging several pulses. Upon completing the measurement the computer corrects the curve for the intensity wavelength dependence of the tungsten lamp. The measurement can be repeated so that the evolution of the stimulation spectrum can be followed over a period of up to 15 hours.

In another measurement the thermally stimulated luminescence (TSL) of the phosphors is measured. Therefor a phosphor sample is first irradiated with X-rays and subsequently transferred in the dark to the oven of the TSL equipment. The phosphor samples are compressed disks each containing 0.5 g of phosphor. The bottom of the oven is an aluminium plate, mounted in a hollow aluminium cylinder which is heated electrically. The temperature is recorded by a thermocouple at the bottom aluminium plate. On top of said plate a second aluminium cylinder is arranged and in this cylinder three quartz disks are mounted with an interspace of 5 mm to ensure thermal insulation.

The oven is built-in in a thermally insulating block of $SiO_2$ (Glass Rock Foam) and has a circular opening at the top to let through the emission light of the phosphor.

During the measurement the sample is heated at a constant rate and the intensity of the luminescence by the phosphor is measured as a function of temperature. The light-intensity is measured with a photomultiplier tube, placed on top of the circular opening of the insulating block. Between that opening and the photomultiplier entrance a combination of a BG3 and HOYA B390 filter is placed to stop the light of wavelengths longer than 480 nm. In this way the black-body radiation signal is strongly diminished. To calibrate the TSL equipment, samples of LiF-TLD-100 were irradiated with X-rays and subsequently heated at a rate of 10 K/min. The position of the peaks is compared with the literature data of this material. All measurements are done at a heating rate of 10 K/min.

Knowing that the temperature at which light is released is related to the stability of the electron-trapping centres (F-centres) of the phosphor we may conclude on comparing the temperature dependent light-

11

emission of the present bismuth co-doped phosphor with a bismuth-free BaFBr:Eu phosphor that by the presence of bismuth electrons are captured in more stable F-centres from which the electrons are released at higher temperature to their ground level under light emission. The peak-temperatures in the TSL spectra are a measure for the stability of the electron trapping and are related to dark decay; the higher the peak temperature the longer is the dark decay time.

Fig. 1 represents stimulation spectra of a bismuth-free europium doped barium fluoride-bromide comparison phosphor and of a bismuth codoped phosphor according to the present invention.

In the diagrams the relative intensity of the stimulated emission of light (R.I.$E_s$) is plotted in the ordinate and the wavelength range in nm is plotted in the abscissa.

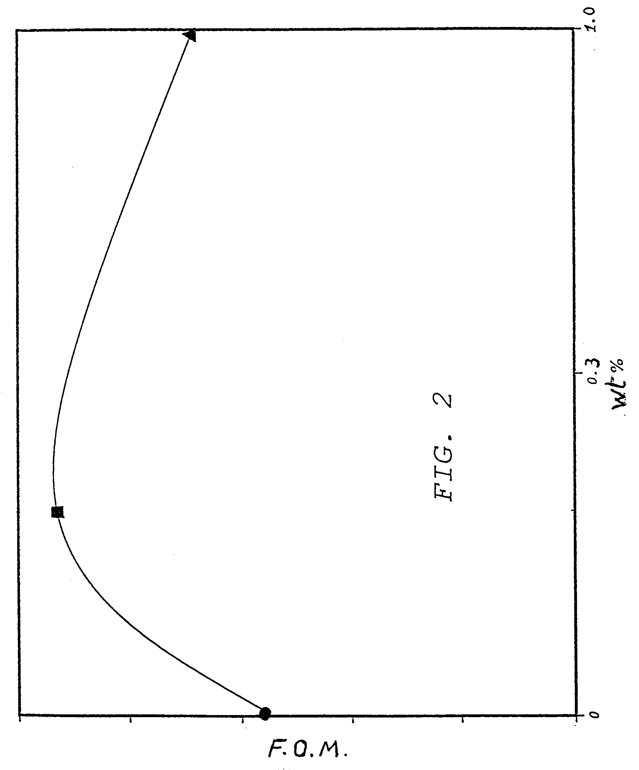

Fig. 2 represents a diagram wherein the Figure of Merit (F.O.M.) of a bismuth-free phosphor and of two bismuth-codoped phosphors according to the present invention is plotted in the ordinate and in the abscissa the bismuth concentration is represented in % by weight (wt %).

The Figures of Merit of said three phosphors were measured using 532 nm light of a frequency doubled Nd-YAG laser for stimulation.

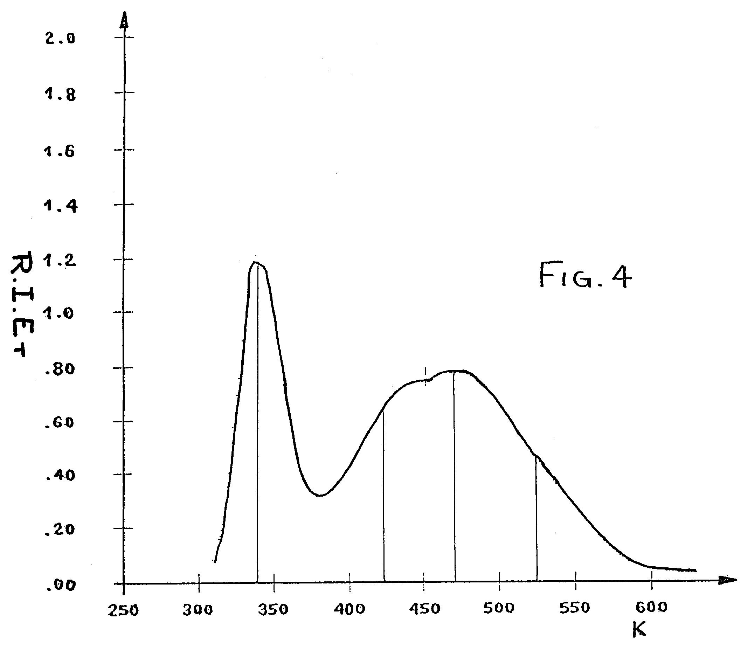

Fig. 3 and 4 represent respectively the TSL spectra of a comparison bismuth-free europium doped barium fluoride-bromide phosphor and of a bismuth-codoped phosphor according to the present invention. In the ordinate the relative light emission intensity (R.I.$E_T$) of thermostimulated light is plotted, and in the abscissa the sample temperature is represented in degree Kelvin (K).

The following examples illustrate the present invention without however limiting it thereto.

INVENTION EXAMPLES 1 and 2 and COMPARISON EXAMPLE 3

A raw mix was prepared with the empirical composition :

$Ba_{0.858}Sr_{0.141}Eu_{0.001}F_{1.0147}Br_{0.9853}$

starting from $BaF_2$. $SrF_2$, $NH_4Br$ and $EuF_3$. One kg of this raw mix was prepared and blended in a V-blender. From this raw mix three samples of each 30 g were taken. One sample (comparison example 3) was fired as such without codopant and to the other two samples $Bi_2O_3$ was added in a given % by weight (see Table 1) % on the total phosphor composition.

The firing of all the samples proceeded in the same way.

A first firing was performed in a box furnace at 850 °C during 2 hours and 40 minutes. 3 crucibles containing each their sample were placed each in a larger crucible containing carbon and water to produce a reducing atmosphere. After grinding, the samples were fired for a second time in a tube furnace at 830 °C for 3 hours in a 99.8 vol % $N_2$ - 0.2 vol % $H_2$ atmosphere. After cooling the phosphor samples were reground.

The ground powders were then dispersed in a binder solution containing cellulose acetobutyrate dissolved in methyl ethyl ketone. The dispersions obtained were coated separately onto a 100 $\mu$m thick transparent sheet of polyethylene terephthalate to give a dry coating weight of about 1000 g/m2. The dried screens were then used to determine the energy storage characteristics of the phosphors.

Figure 1 represents the stimulation spectrum curves of the bismuth-free europium doped barium fluoride-bromide phosphor of Comparison Example 3 (curve 1) and of a bismuth codoped phosphor according to the present invention prepared as described in Invention Example 2 (curve 2). In the diagrams the relative intensity of the stimulated emission (R.I.$E_s$) is plotted in the ordinate and the wavelength range in nm is plotted in the abscissa. From the obtained spectra can be learned that there is a considerable shift of the maximum of the stimulation spectrum towards the shorter wavelengths for the phosphor according to the present invention.

The conversion efficiencies and stimulation energies upon stimulation with 532 nm light were measured and the figure of merit (F.O.M.) as defined above was calculated for each of the phosphor samples. In addition the Figures of Merit (F.O.M.) of the Invention Example 1 material and of Comparative Example 3 material were measured using photostimulating 488 nm light of argon ion laser and 633 nm light of He-Ne laser respectively.

In Fig. 2 the F.O.M. for 532 nm photostimulation is plotted in the ordinate and the bismuth concentration (% by weight) in the abscissa. From the graph in Fig. 2 can be learned that the Figure of Merit for the bismuth containing phosphors according to Invention Examples 1 and 2 respectively (square and triangle in the graph) is substantially higher than for the simply europium doped comparison phosphor of Comparative Example 3 (circle in the graph).

Figures 3 and 4 represent respectively the TSL spectra of the phosphor of comparative example 3 and

12

of the bismuth-codoped phosphor according to the present invention prepared as described in Invention Example 2. In the ordinate the relative light emission intensity is plotted, and in the abscissa the sample temperature in degree Kelvin (K).

It can be seen from Fig. 3 that the phosphor of Comparative Example 3 has a glow curve with 3 peaks. This indicates that there are 3 different sites in the phosphor crystal where electrons can be trapped after exposure of the phosphor to X-rays.

The phosphor according to the present invention prepared according to Invention Example 2 has a glow curve ressembling that of the comparison phosphor but shows between 421 K and 523 K a considerable increase in light emission which means that the introduction of Bi creates additional electron traps. The additional electron traps are correlated with a shift of the stimulation spectrum to the shorter wavelengths and represent additional storage capacity of energy on X-ray exposure.

The increase of the Figure of Merit (F.O.M.) obtained by Bi-codoping of europium-doped barium fluoride-bromide phosphors makes it possible to reduce the X-ray dose for a same speed result compared with only europium doped barium fluoride-bromide phosphors. Moreover, a gain in speed by a same X-ray dose can be transformed into a gain in image-sharpness, such by attenuating or blocking scattered light in the screens by means of filtering dyes (also called screening dyes) incorporated in a layer subjacent the phosphor-containing layer, in the phosphor-containing layer and/or in a protective layer applied thereto.

Table 1 gives the Figures of Merit of the Invention Example phosphor samples and of the phosphor sample of the Comparative Example 3 as a function of the wavelength of the stimulating light (488, 523 and 633 nm respectively).

The erasure depth (Ed) determined as explained hereinbefore and expressed in decibel (dB) is also given in Table 1.

INVENTION EXAMPLES 4 TO 6

A raw mix was prepared with the empirical composition :

$$Ba_{0.858}Sr_{0.141}Eu_{0.001}F_{1.0147}Br_{0.9853}$$

starting from $BaF_2$, $SrF_2$, $NH_4Br$ and $EuF_3$. One kg of this raw mix was prepared and blended in a V-blender. From this raw mix three samples of each 30 g were taken.

To prepare phosphors according to the present invention small amounts of $Fe_2O_3$, $PbF_2$ and of $SnO_2$ were added respectively to the raw mix before firing. All samples were fired in the following way :

A first firing was performed in a box furnace at 850 °C during 160 minutes. The crucibles containing each their sample were placed each in a larger crucible containing carbon and water to produce a reducing atmosphere. After grinding, the samples were fired for a second time in a tube furnace at 830 °C for 3 hours in a 99.8 vol % $N_2$ - 0.2 vol % $H_2$ atmosphere. After cooling the phosphor samples were reground.

In the preparation of the phosphor of the Invention Example 4 0.3 wt % of $Fe_2O_3$ was mixed thoroughly with the raw mix prior to the first firing.

In the preparation of the phosphor of the Invention Example 5 0.3 % of $PbF_2$ was mixed thoroughly with the raw mix prior to the first firing.

In the preparation of the phosphor of the Invention Example 6 0.3 % of $SnO_2$ was mixed thoroughly with the raw mix prior to the first firing. After firing and cooling the phosphor powders were ground, dispersed in a binder solution containing cellulose acetobutyrate dissolved in methyl ethyl ketone and coated as described in the preceding Examples.

From the data in Table 1 can be concluded that the Comparative Example 3 phosphor has a relatively high sensitivity (F.O.M.o) when it is stimulated with light having a wavelength of 633 nm, whereas the Invention Example phosphors when photostimulated with light of 488 nm have a considerably higher sensitivity than when stimulated with light of 633 nm.

A higher dB value means a more complete erasure. The dB data in Table 1 prove a better erasability of the Invention Example phosphors in comparison with the un-codoped phosphor of Comparative Example 3.

TABLE 1

| Example No. | Codopant | wt% | at.% | F.O.M.o at wavelength | | | Ed (dB) |
|---|---|---|---|---|---|---|---|
| | | | | 488 nm | 532 nm | 633 nm | |
| 1 | $Bi_2O_3$ | 0.3 | 0.341 | 5,530 | 4,670 | 4,050 | 30.4 |
| 2 | $Bi_2O_3$ | 1.0 | 1.14 | 3,700 | 3,400 | 3,000 | 29.0 |
| 4 | $Fe_2O_3$ | 0.3 | 0.994 | 4,160 | 3,500 | 3,760 | 32.8 |
| 5 | $PbF_2$ | 0.3 | 0.324 | 2,760 | 2,400 | 1,350 | 29.0 |
| 6 | $SnO_2$ | 0.3 | 0.526 | 5,630 | 5,080 | 3,840 | 31.0 |
| 3 | - | - | | 2,030 | 2,800 | 2,700 | 25.3 |

**Claims**

1. A photostimulable storage phosphor which when stimulated with light having (a) wavelength(s) shorter than 550 nm has a sensitivity higher than obtained by stimulation with light having (a) wavelength(s) longer than 600 nm, said sensitivity being represented by a figure of merit (F.O.M.) calculated by the following equation :

F.O.M. = 1000 x C.E./S.E.

wherein :
C.E. is the total amount of radiation energy expressed in pJ that can be released by photostimulation from a volume of 1 mm$^3$ of a 300 $\mu$m thick phosphor-containing layer irradiated with an X-ray dose of 1 mR, and S.E. is the energy of the stimulating light expressed in $\mu$J needed to release 63 % of the energy stored in an area of 1 mm$^2$ of said layer; and said phosphor (i) is a divalent europium activated barium fluorohalide wherein fluorine is present in excess of the other halide(s), and (ii) contains as codopant at least one metal selected from the group consisting of tin, lead, antimony, bismuth and a transition metal selected from the group consisting of V, Cr, Mn, Fe, Co, and Ni, said codopant metal being present with respect to barium in an atom percent ((at.%) in the range of $10^{-3}$ to 8; the terminology barium fluorohalide including an empirical formula wherein a minor part of the barium (less than 50 atom %) is replaced optionally by at least one metal selected from the group consisting of an alkali metal and an alkaline earth metal other than barium.

2. Photostimulable storage phosphor according to claim 1, wherein said phosphor is a bariumfluorobromide, wherein optionally a minor part (less than 50 atom %) of the bromine is replaced by chlorine, and/or iodine.

3. Photostimulable storage phosphor according to claim 1 or 2, wherein in said barium fluorohalide fluorine is present in a 3 to 12 atom % in excess over bromine or bromine combined with chlorine and/or iodine.

4. Photostimulable storage phosphor according to any of claims 1 to 3, wherein said phosphor includes at least one alkali metal selected from the group consisting of Li, Na, K, Rb and Cs, with respect to Ba in an atom percentage in the range of $10^{-2}$ to 1.

5. Photostimulable storage phosphor according to any of claims 1 to 4, wherein said phosphor as a further codopant contains samarium and/or gadolinium such with respect to barium in an atom percentage in the range of $10^{-5}$ to $10^{-1}$.

6. Photostimulable storage phosphor according to any of claims 1 to 5, wherein said phosphor contains Sr with respect to barium in an atom percentage in the range of $10^{-1}$ to 20.

7. Photostimulable storage phosphor according to any of claims 1 to 6, wherein said phosphor is within the scope of the following empirical formula :

$Ba_{1-x-y-z-3p}Sr_xM^{II}_yF_{2-a-b}Br_aX_b:zA:2bBi$

wherein :

$M^{II}$ is at least one member selected from the group consisting of Mg and Ca;

X is at least one member selected from the group consisting of Cl and I;

x is in the range $0 \leqq x \leqq 0.55$;

y is in the range $0 \leqq y < 0.05$;

a + b is smaller than 1,

a is in the range $0.70 \leqq a \leqq 0.96$,

b is in the range $0 \leqq b < 0.15$;

z is in the range $10^{-6} \leqq z \leqq 10^{-2}$,

A is $Eu^{2+}$ or $Eu^{2+}$ together with one or more of the co-dopants selected from the group consisting of $Eu^{3+}$, Y, Tb, Ce, Tm, Dy, Pr, Ho, Nd, Yb, Er, La, Gd and Lu,

Bi is trivalent bismuth, and

p is in the range of $10^{-5} \leqq p \leqq 0.02$.

8. Photostimulable storage phosphor according to any of claims 1 to 6, wherein said phosphor is within the scope of the following empirical formula (I) :

$$Ba_{1-x-y-p-z-3m}Sr_xM_y^{II}M_{2p}^{I}F_{2-a-b}Br_aX_b:zEu^{2+}:2mA^{3+}$$

wherein :

X is at least one halogen selected from the group consisting of Cl and I;

$M^I$ is at least one alkali metal;

$M^{II}$ is at least one alkaline earth metal selected from the group consisting of Ca and Mg;

A is at least one metal selected from the group consisting of Sb and Bi;

a + b is smaller than 1;

a is in the range $0.70 \leqq a < 0.96$;

b is in the range $0 \leqq b < 0.15$;

x is in the range $0 \leqq x \leqq 0.55$;

y is in the range $0 \leqq y \leqq 10^{-1}$;

p is in the range $0 \leqq p \leqq 0.06$;

z is in the range $10^{-6} \leqq z \leqq 10^{-2}$; and

m is in the range $10^{-5} \leqq m \leqq 0.02$.

9. Photostimulable storage phosphor according to any of claims 1 to 6, wherein said phosphor is within the scope of the following empirical formula (II) :

$$Ba_{1-x-y-p-z-m}Sr_xM_y^{II}M_{2p}^{I}F_{2-a-b}Br_aX_b:zEu^{2+}:(2/q)mT^{q+}$$

wherein :

X is at least one halogen selected from the group consisting of Cl and I,

$M^I$ is at least one alkali metal;

$M^{II}$ is at least one alkaline earth metal selected from the group consisting of Ca and Mg;

T is at least one transition metal selected from the group consisting of V, Cr, Mn, Fe, Co, and Ni;

a + b is smaller than 1;

a is in the range $0.70 \leqq a < 0.96$;

b is in the range $0 \leqq b < 0.15$;

x is in the range $0 \leqq x \leqq 0.55$;

y is in the range $0 \leqq y \leqq 10^{-1}$;

p is in the range $0 \leqq p \leqq 0.06$;

q is 2 or 3;

z is in the range $10^{-6} \leqq z \leqq 10^{-2}$; and

m is in the range $10^{-5} \leqq m \leqq 0.12$.

10. Photostimulable storage phosphor according to any of claims 1 to 6, wherein said phosphor is within the scope of the following empirical formula (III) :

$$Ba_{1-x-y-p-z-m}Sr_xM_y^{II}M_{2p}^{I}F_{2-a-b}Br_aX_b:zEu^{2+}:mQ^{2+}$$

wherein :

X is at least one halogen selected from the group consisting of Cl and I,

$M^I$ is at least one alkali metal, preferably K and/or Cs;

$M^{II}$ is at least one alkaline earth metal selected from the group consisting of Ca and Mg;

Q is at least one metal selected from the group consisting of Pb and Sn;

a + b is smaller than 1;

a is in the range $0.70 \leq a < 0.96$;

b is in the range $0 \leq b < 0.15$;

x is in the range $0 \leq x \leq 0.55$;

y is in the range $0 \leq y \leq 10^{-1}$;

p is in the range $0 \leq p \leq 0.06$;

z is in the range $10^{-6} \leq z \leq 10^{-2}$; and

m is in the range $10^{-5} \leq m \leq 0.08$.

11. Photostimulable storage phosphor according to claim 8, 9 or 10, wherein in said empirical formulae (I), (II) and (III) "a" is in the range of $0.90 \leq a \leq 0.96$, and b is zero.

12. Photostimulable storage phosphor according to claim 8, wherein in said empirical formula (I) p is in the range of $10^{-4} \leq p \leq 10^{-2}$, and the alkali metal is K or Li.

13. Photostimulable storage phosphor according to claim 8, 9 or 10, wherein in said empirical formulae (I), (II) and (III) strontium is present in combination with barium, and the value "x" is in the range $0.12 \leq x \leq 0.17$ when $0.90 \leq a \leq 0.96$, and $0.55 \leq x \leq 0.17$ when $0.85 \leq a \leq 0.96$ and "z" is in the range $10^{-4} < z \leq 10^{-2}$.

14. A radiation image storage panel comprising in a binder layer a photostimulable storage phosphor according to any of the claims 1 to 13.

15. A radiation image recording and reproducing method which comprises the steps of :
    (i) causing said europium(II)-activated codoped barium fluorohalide phosphor according to any of claims 1 to 13 to absorb penetrating radiation having passed through an object or emitted by an object and to store energy of said penetrating radiation in said phosphor,
    (ii) stimulating said phosphor with visible radiation in the wavelength range from 450 nm to 550 nm, to release energy stored in said phosphor as fluorescent light differing in wavelength range from the stimulating light,
    (iii) detecting said fluorescent light, and
    (iv) erasing residual energy stored in said phosphor by at least one type of electromagnetic radiation selected from the group consisting of ultraviolet, visible and infrared light.

FIG. 1

FIG. 2

F.O.M.

wt %

0    0.3    1.0

FIG. 3

Fig. 4

EP 0 522 605 A1

European Patent Office

**EUROPEAN SEARCH REPORT**

Application Number

EP    92 20 1241

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A, D | EP-A-0 104 652 (FUJI PHOTO FILM)<br><br>* claims 1-4 *<br>--- | 1-4,6,9,<br>14,15 | C09K11/85<br>G21K4/00 |
| A | WORLD PATENTS INDEX LATEST<br>Derwent Publications Ltd., London, GB;<br>AN 85-281055<br>& JP-A-60 192 784 (TOSHIBA) 1 October 1985<br>* abstract *<br>--- | 1,2,6,<br>10,13-15 | |
| A | DE-A-3 304 216 (SIEMENS)<br><br>* the whole document *<br>--- | 1,3,7,8,<br>14,15 | |
| A | US-A-3 988 252 (A.FERRETTI)<br><br>* the whole document *<br>--- | 1,5-8,<br>14,15 | |
| A | US-A-3 951 848 (R.W.WOLFE & AL)<br><br>* the whole document *<br><br>----- | 1,10,14,<br>15 | TECHNICAL FIELDS SEARCHED (Int. Cl.5)<br><br>C09K<br>G21K |

The present search report has been drawn up for all claims

| Place of search | Date of completion of the search | Examiner |
|---|---|---|
| THE HAGUE | 16 JULY 1992 | DROUOT M.C. |

EPO FORM 1503 03.82 (P0401)